# EUROPÄISCHE PATENTSCHRIFT

(11) **EP 2 853 875 B1**
(45) Veröffentlichungstag und Bekanntmachung des Hinweises auf die Patenterteilung: **20.02.2019**
(21) Anmeldenummer: 14003190.7
(22) Anmeldetag: 15.09.2014
(51) Int. Cl.: G01M 5/00, G01N 19/08, F28D 21/00, G01M 3/32

(54) **Werkstück, umfassend eine Vorrichtung zur Früherkennung von Rissbildungen in dem Werkstück**
A workpiece comprising a device for the early detection of the formation of fissures in the workpiece
Une pièce comprenant un dispositif de détection de formation de fissures dans cette pièce

(30) Priorität: 30.09.2013 DE 102013016166
(43) Veröffentlichungstag der Anmeldung: 01.04.2015
(73) Patentinhaber: Werkzeugbau Siegfried Hofmann GmbH, 96215 Lichtenfels (DE)
(72) Erfinder: Dinkel, Michael, 96231 Bad Staffelstein - Uetzing (DE); Hofmann, Stefan, 96215 Lichtenfels (DE)
(74) Vertreter: Hafner & Kohl

(56) Entgegenhaltungen:
- EP-A1- 1 547 749
- EP-A1- 2 801 809
- EP-A2- 1 777 479
- EP-A2- 2 045 065
- WO-A2-2007/144458
- DE-A1- 19 740 502
- DE-A1-102009 027 807
- JP-A- 2005 300 498
- JP-A- 2013 035 204
- US-A- 4 448 080
- US-A1- 2005 257 833
- US-A1- 2009 084 188
- MAI G: "WEG VOM KUEHLKANAL", PLASTVERARBEITER, HUETHIG GMBH, HEIDELBERG, DE, 1. Februar 2006 (2006-02-01), Seite 72/73, XP008063064, ISSN: 0032-1338

## Beschreibung

Die Erfindung betrifft ein Werkstück, umfassend eine Vorrichtung zur Früherkennung von Rissbildungen in dem Werkstück oder in mechanisch belasteten Bauteilen wie Trägern, Spanten, und dgl., insbesondere von mit einem Innendruck belasteten medienführenden Werkstücken in Form von Spritzwerkzeugen und deren Einsätzen, Ventilen und deren Komponenten, Flüssigkeits- oder Gasbehältern oder Leitungen, Druckbehältern und Leitungen von Kraftwerken sowie Hydraulikkomponenten oder strukturbildenden Teilen oder Antriebsteilen von insbesondere Flugzeugen, Fahrzeugen oder Schiffen.

Rissbildung von mit einem Innendruck belasteten Werkstücken kann ein ernst zu nehmendes Problem bei einer Vielzahl von unterschiedlichen industriellen Anwendungen darstellen. Daher werden typischerweise Kühlkreisläufe von Kraftwerken, welche Kühlmedien führende Leitungen aufweisen, kontinuierlich hinsichtlich Innendrücken überwacht. Ein etwaiger Defekt des Kühlkreislaufs kann frühzeitig über einen erfassten Druckabfall identifiziert werden, so dass etwaige Gegenmaßnahmen zur Bereitstellung einer ausreichenden Kühlung getroffen werden können. Im Bereich von Verbrennungsmotoren ist es üblich, Öldrucksensoren vorzusehen, die den innerhalb von Motoröl führenden Komponenten vorherrschenden Druck kontinuierlich überwachen. Ein Abfall des Öldrucks kann auf undichte Stellen, insbesondere defekte Dichtungen hinweisen.

Es ist wünschenswert, derartige Defekte und insbesondere Rissbildungen frühzeitig zu erkennen, insbesondere in Fällen, wenn ein Austritt eines innerhalb des Werkstücks geführten Mediums mit einer Kontaminierung der Umgebung einhergehen würde oder wenn die Gefahr besteht, dass das Medium bei einem Austritt mit anderen Komponenten der Umgebung stark exotherm und explosionsartig reagieren würde.

Im Bereich der Spritzgusstechnik sind Spritzwerkzeuge wie Spritzgussformen und Einsätze für Spritzgussformen bekannt, die unter hohem Druck mit flüssiger Schmelze befüllt bzw. umspült werden. Insbesondere beim Aluminiumdruckguss unterliegen die Spritzwerkzeuge hohen thermischen und mechanischen Belastungen. Die Einsätze reißen oftmals bei wiederholtem Gebrauch. Problematisch ist insbesondere, dass die Einsätze typischerweise zur Kühlung Kühlkanäle aufweisen, in denen meist Wasser als Kühlmedium geführt ist. Gelangt das Wasser über Risse in direkten Kontakt mit dem heißen Aluminium, so kann es zur Explosion kommen. Aus dem Stand der Technik, wie es beispielsweise in der EP 1 547 749 A1 oder JP 2005 300 498 A beschrieben ist, sind Vorrichtungen und Verfahren zur Früherkennung von Rissen und Fehlern in Werkstücken für Spritzgießprozesse bekannt. Es ist auch bekannt, wie es beispielsweise in der JP 2013 035 204 A oder EP 2 045 065 A2 offenbart ist, Werkstücke für Spritzgießvorrichtungen durch ein sogenanntes generatives Aufbauverfahren herzustellen.

Ausgehend von diesem Stand der Technik ist es Aufgabe der vorliegenden Erfindung, eine Vorrichtung zur Früherkennung von Rissbildungen anzugeben, die eine zuverlässige und frühzeitige Identifizierung von Rissen ermöglicht.

Die Aufgabe wird gelöst durch eine Vorrichtung der eingangs genannten Art mit den kennzeichnenden Merkmalen des Patentanspruches 1.

Vorteilhafte Ausführungsformen der Erfindung sind Gegenstand der Unteransprüche.

Als Kern der Erfindung wird es angesehen, im Bereich wenigstens einer rissgefährdeten Oberfläche wenigstens einen mit einem Prüfmedium unter Druck beaufschlagten Prüfraum anzuordnen, der durch ein generatives Herstellungsverfahren des Werkstücks oder eines Werkstückabschnitts ausgebildet ist.

Eine Rissbildung des Werkstücks wird entweder über einen Druckabfall innerhalb des Prüfraums identifiziert, welcher über einen am Prüfraum angeschlossenen Drucksensor erfassbar ist, oder mittels eines Gassensors erfasst, der auf ein bei Rissbildung aus dem Prüfraum austretendes Prüfmedium reagierfähig ist und in der Umgebung des Prüfraums angeordnet ist.

Als generative Herstellungsverfahren kommen insbesondere Verfahren in Betracht, bei denen das Werkstück bzw. der Werkstückabschnitt schichtweise aus durch Einwirkung von Strahlung verfestigbarem Aufbaumaterial gebildet wird. Solche üblicherweise als Lasersinter- oder Laserschmelzverfahren bezeichnete Herstellungsverfahren haben zum Vorteil, dass Bauteile auch in geringer Stückzahl wirtschaftlich hergestellt werden können. Ein derartiges generatives Herstellungsverfahren stellt die effiziente Herstellung des den Prüfraum beinhaltenden Werkstückes bzw. Werkstückabschnittes sicher.

Es ist somit vorgesehen, das Werkstück entweder vollständig mittels dem generativen Herstellungsverfahren herzustellen oder den Werkstückabschnitt, welcher den Prüfraum beinhaltet, derartig herzustellen. Letzterer Fall bezieht sich auf die sogenannte Hybridbauweise, bei der eine Komponente des Werkstücks konventionell, beispielsweise durch Gieß- oder Fräsverfahren hergestellt wird. Auf diese Komponente wird in einem weiteren Verfahrensschritt der Werkstückabschnitt generativ aufgebaut, wobei sukzessive Schichten aus pulverförmigen und insbesondere metallischen Aufbaumaterial durch Einwirkung von Strahlung verfestigt werden. Die dazu verwendete Strahlung kann Elektronen- oder Laserstrahlung umfassen.

Bei Rissbildung wird ein Druckabfall im Prüfraum erzeugt, der mittels des Drucksensors zuverlässig erfassbar ist. Entsprechend ist eine Früherkennung von Rissbildungen gegeben, die in einer Vielzahl von verschiedenster technischer Bereiche Anwendung finden kann. Die Früherkennung ermöglicht generell, auf die Gefahrensituation zeitnah reagieren zu können und adäquate Gegenmaßnahmen einzuleiten.

Jedoch ist der erfindungswesentliche Gedanke nicht darauf beschränkt, eine Rissbildung mittels Erfassung eines Druckabfalls im Prüfraum zu erkennen. Vielmehr ist ebenso vorgesehen, eine Rissbildung mittels eines Gassensors zu detektieren, welcher in der Umgebung des Prüfraums angeordnet ist und auf das im Prüfraum vorgesehene Prüfmedium reagierfähig ist. Entsprechend finden bei derartigen Ausführungsformen vorzugsweise reaktive Substanzen als Prüfmedien Anwendung, die mittels geeigneter Reaktionen in Spuren nachweisbar sind. Ein Einlass- bzw. Messkanal zur Anordnung eines Drucksensors ist nicht notwendig. Vielmehr kann der mit dem Prüfmedium beaufschlagte Prüfraum geschlossen ausgebildet werden, um eine hohe mechanische Stabilität des Bauteils sicherzustellen. Eine derartige Detektion von Rissbildung eignet sich daher insbesondere für strukturbildende und/oder mechanisch belastete Bauteile.

Es versteht sich, dass die erfindungsgemäße Vorrichtung zur Früherkennung von Rissbildungen in medienführenden Werkstücken vorteilhafterweise in Ventilen und deren Komponenten, Flüssigkeits- oder Gasbehältern, Druckbehältern und Leitungen, insbesondere von Kraftwerken sowie in Hydraulikkomponenten eingesetzt wird. Ferner ist vorgesehen strukturbildende Teile oder Antriebsteile von insbesondere Flugzeugen, Fahrzeugen oder Schiffen mit der erfindungsgemäßen Vorrichtung zur Rissbildung zu versehen.

Erfindungsgemäß ist der Prüfraum unter einer druckbelasteten Kontur des Werkstückes angeordnet. Beispielsweise ist das Werkstück als Einsatz für eine Druckgussform ausgebildet, welche beim Druckgießen erheblichen Drücken ausgesetzt ist. Der Prüfraum dient bei diesem Ausführungsbeispiel dazu, frühzeitig zu erkennen, ob das verflüssigte Spritzmaterial während des Druckgießens in den Einsatz gelangt. In einem anderen Ausführungsbeispiel ist das Werkstück als Leitung ausgebildet, welches beispielsweise unter Druckbeaufschlagung ein gasförmiges oder flüssiges Medium führt. Der Prüfraum ist beispielsweise in der Wandung der Leitung angeordnet, um frühzeitig Risse anzuzeigen. Zudem kann durch eine derartig ausgebildete Vorrichtung ein Austritt des Gas- oder flüssigen Mediums bei Rissbildung vermieden werden, wenn der im Prüfraum vorherrschende Druck größer ist als die Drücke, die typischerweise im medienführenden Innenraum auftreten.

Dadurch, dass der Prüfraum durch ein generatives Herstellungsverfahren gebildet ist, ist hinsichtlich der räumlichen Gestaltung des Prüfraums eine Vielzahl von unterschiedlichen Möglichkeiten gegeben, die wirtschaftlich effizient realisiert werden können. In einem Ausführungsbeispiel wird der Prüfraum durch eine oder mehrere generativ im Werkstückinnenbereich angeordnete Prüfleitung gebildet. In einem anderen Ausführungsbeispiel wird der Prüfraum durch einen porösen oder teilporösen Innenbereich des Werkstücks oder von einer durch Einzelkanalabschnitte gebildeten Netzstruktur gebildet. Selbstverständlich können auch Kombinationen vorgesehen sein, bei denen der Prüfraum abschnittsweise von Prüfleitungen, Netzstruktur und/oder porösen oder teilporösen Innenbereichen gebildet ist. Poröse oder teilporöse Bereiche des Werkstückes lassen sich durch das generative Herstellungsverfahren, insbesondere Laserschmelzverfahren, besonders einfach dadurch erzeugen, dass die entsprechenden Bereiche mit einem verminderten Energieeintrag pro Fläche bestrahlt werden, was zur Folge hat, dass das pulverartige metallische Baumaterial zumindest zum Teil nicht vollständig aufgeschmolzen wird. Nach Verfestigung der entsprechenden Schicht ist so ein poröser bzw. Teilbereich des Werkstückes gebildet.

Die Dichte der Einzelkanalabschnitte ist vorzugsweise abhängig von einer potentiellen Rissgefährdung des sie beinhaltenden Werkstückabschnittes. So können beispielsweise Werkstückabschnitte, die besonders hohen Drücken oder mechanischen Belastungen ausgesetzt sind und/oder an exponierter Stelle lokalisiert sind, eine erhöhte Dichte von Einzelkanalabschnitten aufweisen, um eine zuverlässige Früherkennung von Rissbildungen sicherzustellen.

Bei Spritzgussanwendungen verläuft der Prüfraum vorzugsweise konturnah zu einer formbildenden Innenfläche des Spritzgießwerkzeugs. Entsprechend verläuft der Prüfraum in unmittelbarer Nähe der mit Druck beaufschlagten Innenfläche von Spritzgussformen und deren Einsätzen. Damit wird erreicht, dass eine Erkennung von Rissen noch vor einer weitgehenden Schädigung des Spritzwerkzeuges ermöglicht ist.

Es hat sich als vorteilhaft erwiesen, wenn der Abstand zwischen der druckbelasteten Kontur des Werkstückes, insbesondere des Spritzwerkstückes, und dem darunter verlaufenden Prüfraum im Wesentlichen 1 - 5 mm beträgt.

Das Werkstück wird mit einer Kühlkanalstruktur versehen und der Prüfraum verläuft zumindest bereichsweise zwischen der druckbelasteten Kontur des Werkstückes und der Kühlkanalstruktur. Ein derartiges Werkstück kann insbesondere als Spritzgusswerkzeug insbesondere als Einsatz für eine Spritzgussform ausgebildet sein. Insbesondere beim Aluminiumdruckguss ist es wünschenswert, eine frühzeitige Erkennung von Rissen bereitzustellen da es beim Kontakt des heißen Aluminiums mit dem in der Kühlkanalstruktur geführtem Wasser zu Explosionen kommen kann. Der zwischen der Kühlkanalstruktur und der druckbelasteten Außenkontur des Einsatzes liegende Prüfraum ermöglicht eine derartige frühzeitige Erkennung. Zudem kann einem weiteren Eindringen der Schmelze in das Werkstück dadurch entgegengewirkt werden, wenn das Prüfmedium im Prüfraum unter Drücke geführt wird, die größer sind als diejenigen Drücke, mit denen das Druckgussverfahren durchgeführt wird.

In diesem Zusammenhang hat es sich als vorteilhaft erwiesen, wenn das im Prüfraum angeordnete Prüfmedium mit einem in Verbindung mit dem als Spritzwerkzeug ausgebildeten Werkstück verwendeten Spritzmaterial nicht reagierfähig ist. Im Falle des Aluminiumdruckgusses kann beispielsweise Pressluft als Druckmedium verwendet werden. Jedoch ist es auch in Ausführungsformen die Flüssigkeits- oder Gasbehälter, Leitungen, Ventile oder dergleichen betreffen sinnvoll, Druckmedien zu verwenden, die reaktionsträge sind, insbesondere wenn bei Rissbildung ein unmittelbarer Kontakt mit einem reaktionsfreudigen Medium zu befürchten ist.

In Weiterbildung der Erfindung ist vorgesehen, den Prüfraum zumindest in einem hochbelasteten Konturbereich von Druckaufnahmeelementen zu durchsetzen.

Diese Druckaufnahmeelemente sind beispielsweise von Brückenstrukturen gebildet, die mit ihren Bogenbereichen zur druckbelasteten Kontur hin gerichtet sind. Derartige Brückenstrukturen lassen sich während des generativen Herstellungsverfahrens einfach in das Werkstück einbringen. Die Druckaufnahmeelemente können Druckschwankungen, die lokal auftreten, zumindest teilweise kompensieren, so dass der Prüfraum zusätzlich zur Früherkennung auch dafür genutzt wird, einer etwaigen Rissbildung aktiv entgegenzuwirken.

Der Prüfraum ist vorzugsweise mit zumindest teilweise unverfestigtem oder lediglich gesintertem pulverartigen metallischen Baumaterial ausgefüllt. Die entsprechenden Bereiche werden somit während des generativen Herstellungsprozesses nicht über eine, die oberhalb der Schmelztemperatur des metallischen Baumaterials liegenden Temperatur erhitzt.

An dem Prüfraum ist vorzugsweise wenigstens ein Einlass- oder Messkanal angeschlossen, der Messkanal kann beispielsweise dazu ausgeführt sein, ein als Sonde ausgeführtes Druckmessgerät aufzunehmen, um die innerhalb des Prüfraums vorliegenden Druckverhältnisse zu erfassen.

Bevorzugt wird Druckluft als Prüfmedium im Prüfraum verwendet, insbesondere in Anwendungen, in denen eine Reaktion des Mediums mit Sauerstoff aus der nicht zu befürchten ist.

Im Folgenden wird die Erfindung anhand von Ausführungsbeispielen, die in den Zeichnungsfiguren gezeigt sind, näher beschrieben. Dabei zeigen:
- Fig. 1: ein als Behältnis ausgebildetes Werkstück gemäß einem ersten Ausführungsbeispiel der Erfindung;
- Fig. 2: ein als Leitungsabschnitt ausgeführtes Werkstück gemäß einem zweiten Ausführungsbeispiel;
- Fig. 3: ein als Einsatz einer Spritzgussform ausgebildetes Werkstück gemäß einem dritten Ausführungsbeispiel;
- Fig. 4: ein Werkstück gemäß einem vierten Ausführungsbeispiel, deren Prüfraum Brückenstrukturen mit Bogenbereichen aufweist, die als Druckaufnahmeelemente fungieren;
- Fig. 5: ein als Längsträger ausgebildetes Werkstück gemäß einem sechsten Ausführungsbeispiel mit teilweise gesintertem Prüfraum;
- Fig. 6: exemplarische Darstellungen von Prüfräumen, die eine durch Einzelkanalabschnitte gebildete Netzstruktur aufweisen.

Einander entsprechende Teile sind allen Figuren mit den gleichen Bezugszeichen versehen.

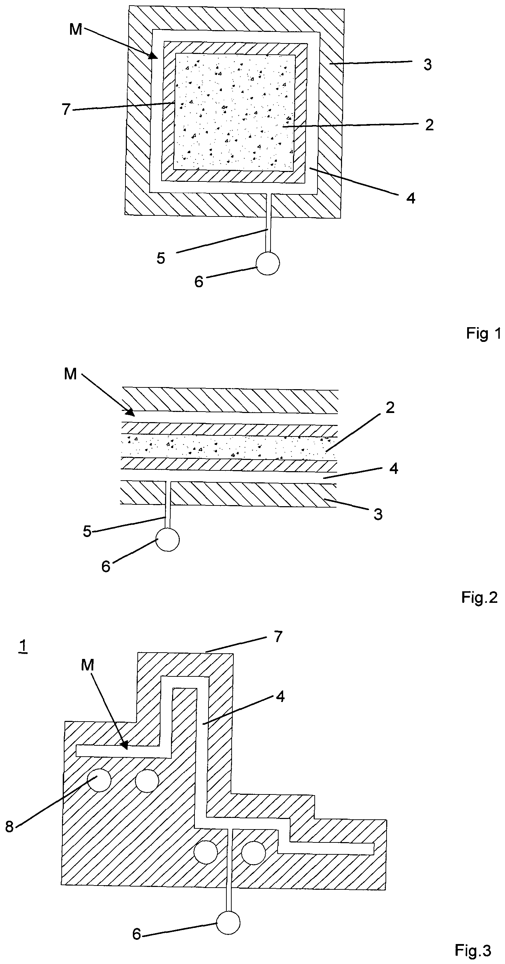

Figur 1 zeigt in einer schematischen Schnittdarstellung ein Werkstück 1, welches als Behältnis ausgeführt ist. Entsprechend weist das Werkstück 1 einen Innenbereich 2 zur Aufnahme eines gasförmigen- oder flüssigen Mediums auf.

In einem Ausführungsbeispiel ist das Werkstück 1 ein Druckbehälter, bei dem das im Innenbereich 2 gelagerte Prüfmedium M unter gegenüber eines Umgebungsdrucks erhöhten Druckverhältnissen bevorratet ist. In eine Wandung 3 des Werkstückes 1 ist ein Prüfraum 4 eingebracht, der durch ein generatives Herstellungsverfahren gebildet wurde. Am Prüfraum 4 ist ein Einlass- bzw. Messkanal 5 vorgesehen, an dem zur Messung des Druckes im Prüfraum 4 ein Drucksensor 6 angeordnet ist. Der im Prüfraum 4 vorherrschende Druck liegt über den im Innenbereich 2 vorherrschenden Drücken. Somit verursacht eine Rissbildung in dem den Innenbereich 2 zugewandten Abschnitt der Wandung 3 einen raschen Druckabfall, der mittels des Drucksensor 6 erfassbar ist.

Der Prüfraum 4 ist entsprechend konturnah an einer druckbelasteten Kontur 7 des Werkstückes 1 angeordnet, so dass eine frühzeitige Erkennung von Rissen ermöglicht ist. Der Prüfraum 4 umfasst eine Vielzahl von Prüfleitungen, die eine in Figur 1 nicht näher dargestellte Netzstruktur bilden.

Figur 2 zeigt ein weiteres Ausführungsbeispiel, bei dem das Werkstück 1 als Leitungsabschnitt ausgeführt ist. Wesentliche Merkmale entsprechen hierbei dem bereits in Figur 1 gezeigten Ausführungsbeispiel. Das Werkstück 1 des zweiten Ausführungsbeispiels ist zur Führung eines gasförmigen oder flüssigen Mediums im Innenbereich 2 ausgebildet. Zwischen einer Umgebung des Leitungsabschnitts und dem Innenbereich 2 ist der Prüfraum 4 angeordnet, in dem ein im Vergleich zum Innenbereich 2 erhöhter Druck vorherrscht. Über den Einlass- bzw. Messkanal 5 und dem Drucksensor 6 ist der Druck im Prüfraum 4 kontinuierlich überwachbar, so dass eine Rissbildung durch Detektion eines Druckabfalls frühzeitig erkannt werden kann.

Gemäß alternativen Ausführungsbeispielen umfasst der Prüfraum 4 ein oder mehrere Prüfleitungen und/oder einen Abschnitt mit porösen oder teilporösen Innenbereich, der mittels eines generativen Herstellungsverfahrens, insbesondere eines Lasersinter- und/oder Laserschmelzverfahrens hergestellt wurde.

Figur 3 zeigt ein Werkstück 1 gemäß einem weiteren Ausführungsbeispiel in einer schematischen Schnittdarstellung, das als Einsatz für eine Spritzgussform ausgebildet ist. Der Prüfraum 4 ist nahe der druckbelasteten Kontur 7 angeordnet, welche in nicht näher dargestellter Art und Weise bei Verwendung des als Einsatz ausgebildeten Werkstückes 1 beim Druckgießen mit einem Spritzmaterial, beispielsweise Aluminium beaufschlagt wird. Der Abstand des Prüfraums 4 zur druckbelasteten Kontur 7 des Werkstückes 1 beträgt in dem exemplarisch dargestellten Ausführungsbeispiel 4 mm.

Es versteht sich, dass in Abhängigkeit von den verwendeten Spritzmaterialien und den Dimensionen der herzustellenden Formteile auch andere Abstände bevorzugt sind, wie beispielsweise Abstände von wenigen Zentimetern bis hin zu wenigen Millimetern.

Im Werkstück 1 sind Kühlkanäle 8 einer Kühlkanalstruktur eingebracht, die zur Kühlung des Werkstückes 1 beim bestimmungsgemäßen Gebrauch mit einem Kühlmittel, insbesondere Wasser durchspült sind. Der Prüfraum 4 ist zwischen der Kühlkanalstruktur und der druckbelasteten Kontur 7 angeordnet, so dass Risse frühzeitig erkannt werden können, im Idealfall bevor heißes Spritzmaterial in Kontakt mit dem in den Kühlkanälen 8 geführtem Kühlmittel kommen. Entsprechend den bereits beschriebenen Ausführungsbeispielen ist der Prüfraum 4 abschnittsweise von Prüfleitungen gebildet, die gegebenenfalls eine Netzstruktur bilden oder abschnittsweise poröse oder teilporöse Innenbereiche aufweisen.

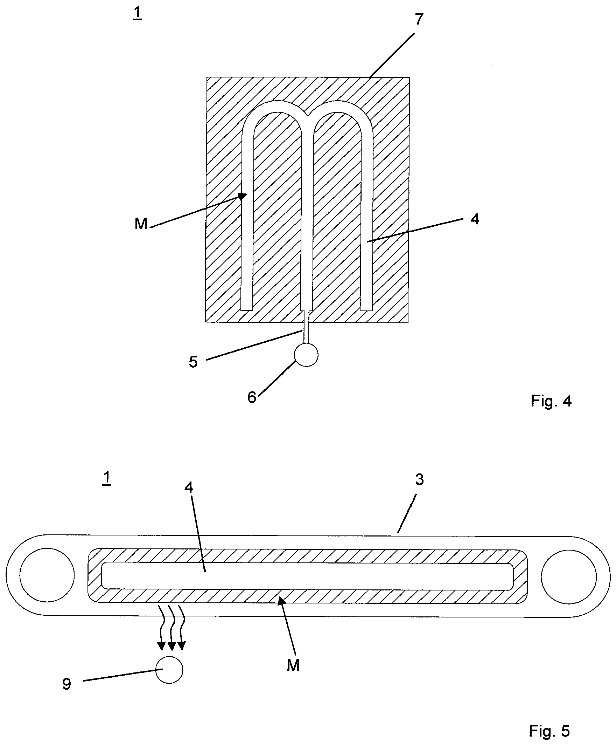

Figur 4 zeigt ein weiteres Werkstück 1 gemäß einem möglichen Ausführungsbeispiel der Erfindung. Gezeigt ist ein schematischer Querschnitt durch das Werkstück 1 mit Prüfraum 4, der bogenförmige Brückenstrukturen aufweist. Die Brückenstrukturen sind mit ihren Bogenbereichen in Richtung der druckbelasteten Kontur 7 gerichtet und fungieren als Druckaufnahmeelemente, um die beim bestimmungsgemäßen Gebrauch des Werkstücks 1 auf der Kontur 7 lastenden Drücke zumindest teilweise zu kompensieren. Gemäß einem konkreten Ausführungsbeispiel ist das in Figur 4 gezeigte Werkstück 1 als Einsatz zur Verwendung in einem Aluminiumdruckgussverfahren ausgebildet.

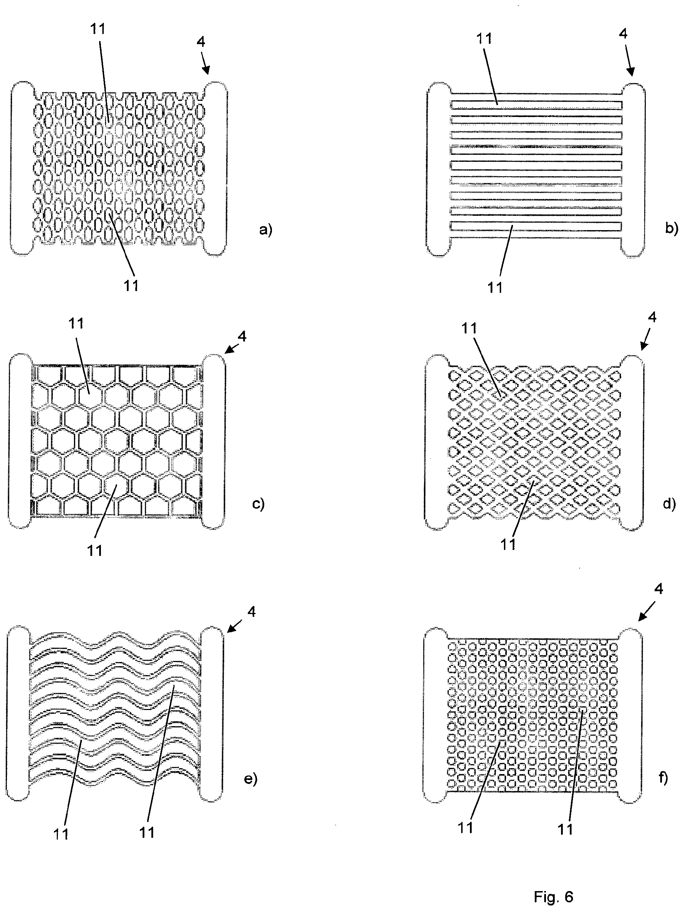

Figur 5 zeigt ein weiteres als Trägerkonstruktion ausgeführtes Werkstück 1 gemäß einem fünften Ausführungsbeispiel der Erfindung. Das in Figur 6 in einer schematischen Schnittdarstellung gezeigte Werkstück 1 ist als Längsträger ausgeführt, der einen geschlossenen Prüfraum 4 aufweist, in dem ein reaktionsfähiges und gasförmiges Prüfmedium M unter Druck eingeschlossen ist. Bei Rissbildung ist das austretende Prüfmedium M mittels des Gassensors 9 chemisch nachweisbar. Der in Figur 5 gezeigte Längsträger weist einen Prüfraum 4 auf, der teilweise mit gesintertem pulverartigem metallischen Baumaterial ausgefüllt ist. Derartige Prüfräume sind mittels des generativen Herstellungsverfahrens dadurch herstellbar, dass das metallische Baumaterial bei Bestrahlung nicht über ihre Schmelztemperatur erhitzt wird.

Figur 6 zeigt schematisch mehrere Prüfräume 4, die durch Einzelkanalabschnitte gebildete Netzstrukturen aufweisen. Die Ausführungsbeispiele gemäß Figuren 6b und 6e zeigen nicht miteinander quer verbundene Einzelkanalabschnitte 11. Alle gezeigten Prüfräume 4 bilden jedoch eine flächenartige Struktur und sind dazu geeignet, eine etwaige Rissbildung über die gesamte druckbelastete Kontur 7 zu ermöglichen.

Der Prüfraum 4 mit den in Figuren 6a, 6c, 6d und 6f gezeigten Netzstrukturen weisen Einzelkanalabschnitte 11 auf, die auch in Querrichtung miteinander verbunden sind. Dabei werden zwischen den Einzelkanalabschnitten 11 Bereiche gebildet, die oval, wabenförmigen, rautenförmigen oder runden Querschnitt aufweisen.

Je nach räumlicher Ausdehnung der druckbelasteten Kontur 7, unter der der Prüfraum 4 angeordnet ist, ist vorgesehen, die Dichte der Einzelkanalabschnitte 11 zu variieren. Insbesondere ist vorgesehen, in Bereichen erhöhter Belastung die Netzstruktur des Prüfraums 4 derart auszubilden, dass dieser im belasteten Bereich eine Dichteanordnung von Einzelkanalabschnitten 11 aufweist, um Rissbildungen frühzeitig erkennen zu können.

Bei mechanisch belasteten oder strukturbildenden Werkstücken 1 ist vorgesehen, die Dichte der die Netzstruktur bildende Einzelkanalabschnitte 11 in Abhängigkeit einer erfassten oder insbesondere mittels Simulation ermittelten mechanischen Belastung zu variieren.

### BEZUGSZEICHENLISTE

- 1: Werkstück
- 2: Innenbereich
- 3: Wandung
- 4: Prüfraum
- 5: Einlasskanal
- 6: Drucksensor
- 7: Kontur
- 8: Kühlkanal
- 9: Gassensor
- 10: Bereich
- 11: Einzelkanalabschnitt
- M: Prüfmedium

## Patentansprüche

1. Werkstück (1), umfassend eine Vorrichtung zur Früherkennung von Rissbildungen in dem Werkstück (1)
**dadurch gekennzeichnet, dass**
im Bereich wenigstens einer rissgefährdeten Oberfläche des Werkstücks (1) wenigstens ein mit einem Prüfmedium unter Druck beaufschlagter Prüfraum (4) angeordnet ist, der durch ein generatives Herstellungsverfahren des Werkstückes (1) oder eines Werkstückabschnittes ausgebildet ist, wobei am Prüfraum (4) entweder ein Drucksensor (6) zur Ermittlung eines aus einer Rissbildung des Werkstückes (1) resultierenden Druckabfalls angeschlossen ist oder in der Umgebung des Prüfraums (4) ein Gassensor (9) angeordnet ist, der auf ein bei Rissbildung aus dem Prüfraum (4) austretendes Prüfmedium reagierfähig ist, wobei der Prüfraum (4) unter einer druckbelasteten Kontur (7) des Werkstückes (1) angeordnet ist, wobei das Werkstück (1) mit einer Kühlkanalstruktur (8) versehen ist und der Prüfraum (4) zumindest bereichsweise zwischen der druckbelasteten Kontur (7) des Werkstückes (1) und der Kühlkanalstruktur (8) verläuft.

2. Werkstück nach Anspruch 1,
**dadurch gekennzeichnet, dass**
der Prüfraum (4) durch eine oder mehrere generativ im Werkstückinnenbereich angeordnete Prüfleitungen gebildet wird.

3. Werkstück nach einem der vorhergehenden Ansprüche,
**dadurch gekennzeichnet, dass**
der Prüfraum (4) durch ein bei einem generativen Herstellungsverfahren unter Verwendung von pulverartigem metallischem und zumindest teilweise nicht vollständig aufgeschlossenen Baumaterial und damit porösen oder teilporösen Innenbereich des Werkstückes (1) gebildet wird.

4. Werkstück nach einem der vorhergehenden Ansprüche,
**dadurch gekennzeichnet, dass**
der Prüfraum (4) eine durch Einzelkanalabschnitte gebildete Netzstruktur aufweist.

5. Werkstück nach Anspruch 4,
**dadurch gekennzeichnet, dass**
die Dichte der Einzelkanalabschnitte abhängig von einer potentiellen Rissgefährdung des sie beinhaltenden Werkstückabschnittes ist.

6. Werkstück nach einem der vorangehenden Ansprüche,
**dadurch gekennzeichnet, dass**
der Prüfraum (4) konturnah zu einer formbildenden Innenfläche des Spritzgießwerkzeuges verläuft.

7. Werkstück nach einem der vorangehenden Ansprüche,
**dadurch gekennzeichnet, dass**
der Abstand zwischen der druckbelasteten Kontur (7) des Werkstückes (1) und dem darunter verlaufenden Prüfraum (4) 1 - 5 mm beträgt.

8. Werkstück nach einem der vorhergehenden Ansprüche,
**dadurch gekennzeichnet, dass**
das im Prüfraum (4) angeordnete Prüfmedium mit einem in Verbindung mit dem als Spritzwerkzeug ausgebildeten Werkstück (1) verwendeten Spritzmaterial nicht reagierfähig ist.

9. Werkstück nach einem der vorhergehenden Ansprüche,
**dadurch gekennzeichnet, dass**
der Prüfraum (4) zumindest in einem hochbelasteten Konturbereich von Druckaufnahmeelementen durchsetzt ist.

10. Werkstück nach Anspruch 9,
**dadurch gekennzeichnet, dass**
der Prüfraum (4) generativ eingebaute, mit ihren Bogenbereichen zur druckbelasteten Kontur (7) hin gerichtete Brückenstrukturen als Druckaufnahmeelemente aufweist.

11. Werkstück nach einem der vorhergehenden Ansprüche,
**dadurch gekennzeichnet, dass**
der Prüfraum (4) mit zumindest teilweise unverfestigtem oder lediglich gesintertem pulverartigen metallischen Baumaterial ausgefüllt ist.

12. Werkstück nach einem der vorhergehenden Ansprüche,
**dadurch gekennzeichnet, dass**
an dem Prüfraum (4) wenigstens ein Einlass- oder Messkanal (5) angeschlossen ist.

13. Werkstück nach einem der vorhergehenden Ansprüche,
**gekennzeichnet durch**
Druckluft als Prüfmedium im Prüfraum (4).

## Claims

1. Workpiece (1), comprising a device for early detection of crack formations in the workpiece (1),
**characterized in that**
in the region of at least one surface at risk of cracking of the workpiece (1) at least one pressure chamber (4) is arranged, to which a testing medium under pressure is applied and which is formed by a generative manufacturing process of the workpiece (1) or a workpiece portion, wherein either a pressure sensor (6) for detecting a pressure drop resulting from a crack formation of the workpiece (1) is connected to the testing chamber (4), or a gas sensor (9) is arranged in the vicinity of the testing chamber (4), which reacts to a testing medium escaping from the testing chamber (4) in the event of a crack formation, wherein the testing chamber (4) is arranged under a pressure-loaded contour (7) of the workpiece (1), wherein the workpiece (1) is provided with a cooling channel structure (8) and the testing chamber (4) extends at least sectionally between the pressure-loaded contour (7) of the workpiece (1) and the cooling channel structure (8).

2. Workpiece according to claim 1,
**characterized in that**
the testing chamber (4) is formed by one or multiple testing lines arranged generatively in the inner region of the workpiece.

3. Workpiece according to any of the preceding claims,
**characterized in that**
the testing chamber (4) is formed by an inner region of the workpiece (1) that is created in the generative manufacturing process by using powdered metallic, and at least partially not completely broken down, building material, and is consequently porous or partially porous.

4. Workpiece according to any of the preceding claims,
**characterized in that**
testing chamber (4) has a grid structure formed by individual channel portions

5. Workpiece according to claim 4,
**characterized in that**
the density of the individual channel portions is dependent on a potential risk of cracking of a portion of the workpiece containing said individual channel portions.

6. Workpiece according to any of the preceding claims,
**characterized in that**
the testing chamber (4) closely follows a contour of a shape-forming inner surface of the injection- molding tool.

7. Workpiece according to any of the preceding claims,
**characterized in that** the distance between the pressure-loaded contour (7) of the workpiece (1) and said testing chamber (4) extending there under is 1 - 5 mm.

8. Workpiece according to any of the preceding claims,
**characterized in that**
testing medium disposed in the testing chamber (4) is not reactive with respect to an injected material that is used in conjunction with the workpiece (1) formed as an injection- molding tool.

9. Workpiece according to any of the preceding claims,
**characterized in that**
the testing chamber (4) is interspersed with pressure-absorbing elements at least in a region of a contour that is subjected to high loads.

10. Workpiece according to claim 9,
**characterized in that**
the testing chamber (4) comprises, as pressure-absorbing elements, generatively incorporated bridge structures directed with their arched regions toward the compressively loaded contour (7).

11. Workpiece according to any of the preceding claims,
**characterized in that** the testing chamber is filled with at least partially unsolidified or merely sintered powdered metallic building material.

12. Workpiece according to any of the preceding claims,
**characterized in that**
at least one inlet or measuring channel (5) is connected to the testing chamber (4).

13. Workpiece according to any of the preceding claims,
**characterized by**
compressed air as the testing medium in the testing chamber (4).

## Revendications

1. Pièce (1) comprenant un dispositif de détection précoce de formations de fissures dans la pièce (1),
**caractérisée en ce que**
dans la partie au moins d'une surface de la pièce (1), susceptible de se fissurer, est disposé au moins un espace d'essai (4) mis sous pression à l'aide d'un milieu d'essai, lequel espace d'essai est réalisé au moyen d'un procédé de fabrication génératif de la pièce (1) ou d'une section de la pièce, dans lequel procédé soit un capteur de pression (6) destiné à déterminer une baisse de pression résultant d'une formation de fissures de la pièce (1) est raccordé à l'espace d'essai (4) soit un capteur de gaz (9) est disposé dans les environs de l'espace d'essai (4), lequel capteur est apte à réagir à un milieu d'essai sortant de l'espace d'essai (4) en cas de formation de fissures, l'espace d'essai (4) étant disposé en dessous d'un contour (7) de la pièce (1), sollicité par pression, la pièce (1) étant munie d'une structure à canaux de refroidissement (8), et l'espace d'essai (4) s'étendant au moins par endroits entre le contour (7) de la pièce (7), sollicité par pression, et la structure à canaux de refroidissement (8).

2. Pièce selon la revendication 1,
**caractérisée en ce que**
l'espace d'essai (4) est formé par une ou plusieurs conduites d'essai disposées de manière générative dans la partie intérieure de la pièce.

3. Pièce selon l'une quelconque des revendications précédentes,
**caractérisée en ce que**
l'espace d'essai (4) est formé en utilisant un matériau de construction métallique poudreux et au moins en partie non totalement ouvert, et donc par une partie intérieure de la pièce (1) poreuse ou partiellement poreuse, lors d'un procédé de fabrication génératif.

4. Pièce selon l'une quelconque des revendications précédentes,
**caractérisée en ce que**
l'espace d'essai (4) présente une structure en réseau formée par des sections de canaux individuels.

5. Pièce selon la revendication 4,
**caractérisée en ce que**
la densité des sections de canaux individuels est fonction d'un risque potentiel de fissures de la section de la pièce les contenant.

6. Pièce selon l'une quelconque des revendications précédentes,
**caractérisée en ce que**
l'espace d'essai (4) s'étend de manière proche au contour d'une surface intérieure façonnée de l'outil de moulage par injection.

7. Pièce selon l'une quelconque des revendications précédentes,
**caractérisée en ce que** l'écart entre le contour (7), sollicité par pression, de la pièce (1) et l'espace d'essai (4) s'étendant en dessous est de 1 à 5 mm.

8. Pièce selon l'une quelconque des revendications précédentes,
**caractérisée en ce que**
le milieu d'essai disposé dans l'espace d'essai (4) n'est pas apte à réagir à un matériau d'injection utilisé en liaison avec la pièce (1) réalisée en tant qu'outil d'injection.

9. Pièce selon l'une quelconque des revendications précédentes,
**caractérisée en ce que**
l'espace d'essai (4) est entrecoupé par des éléments d'absorption de pression, au moins dans une zone de contour hautement sollicitée.

10. Pièce selon la revendication 9,
**caractérisée en ce que**
l'espace d'essai (4) présente, en tant qu'éléments d'absorption de pression, des structures en pont montées générativement, orientées vers le contour (7) sollicité par pression avec leurs zones arquées.

11. Pièce selon l'une quelconque des revendications précédentes,
**caractérisée en ce que** l'espace d'essai (4) est rempli avec du matériau de construction métallique poudreux au moins partiellement non consolidé ou uniquement fritté.

12. Pièce selon l'une quelconque des revendications précédentes,
**caractérisée en ce qu'**
au moins un canal d'admission ou de mesure (5) est raccordé à l'espace d'essai (4).

13. Pièce selon l'une quelconque des revendications précédentes,
**caractérisée par**
de l'air comprimé en tant que milieu d'essai dans l'espace d'essai (4).
